(19) Europäisches Patentamt

European Patent Office

Office européen des brevets

(11) **EP 0 990 870 A1**

(12) **EUROPEAN PATENT APPLICATION**
published in accordance with Art. 158(3) EPC

(43) Date of publication:
05.04.2000 Bulletin 2000/14

(51) Int. Cl.$^7$: **G01B 11/00**, G01D 5/36

(21) Application number: 98914058.7

(86) International application number:
**PCT/JP98/01756**

(22) Date of filing: 17.04.1998

(87) International publication number:
**WO 99/54678 (28.10.1999 Gazette 1999/43)**

(84) Designated Contracting States:
DE FR

(71) Applicant:
**MITSUBISHI DENKI KABUSHIKI KAISHA**
**Tokyo 100-8310 (JP)**

(72) Inventors:
- **SATO, Yoshimitsu**
  **2-chome, Chiyoda-ku, Tokyo 100-8310 (JP)**
- **MIZUTANI, Takao**
  **2-chome, Chiyoda-ku, Tokyo 100-8310 (JP)**

- **SAKUMA, Hirokazu**
  **2-chome, Chiyoda-ku, Tokyo 100-8310 (JP)**
- **OKAMURO, Takashi**
  **2-chome, Chiyoda-ku, Tokyo 100-8310 (JP)**
- **OUMURA, Youichi**
  **2-chome, Chiyoda-ku, Tokyo 100-8310 (JP)**
- **NAKAJIMA, Toshirou**
  **2-chome, Chiyoda-ku, Tokyo 100-8310 (JP)**

(74) Representative: **HOFFMANN - EITLE**
**Patent- und Rechtsanwälte**
**Arabellastrasse 4**
**81925 München (DE)**

(54) **POSITION SENSOR**

(57)     A position detector of high resolving power, the cost of which is low, is provided.

Light emitted from a light source 1 is reflected by a moving section 70 (71) and made to pass through a first slit 3 (31, 32) and also made to pass through a second slit 20 (20-1, 20-2) in a fixed section 13 (130, 131). A position of the moving section 70 (71) is detected by Moire stripes obtained at this time.

It is possible to shorten the slit length, and the cost of the device can be reduced.

**FIG.1**

**Description**

TECHNICAL FIELD OF THE INVENTION

The present invention relates to a position detector for detecting a position of an object by utilizing Moire stripes.

BACKGROUND OF THE INVENTION

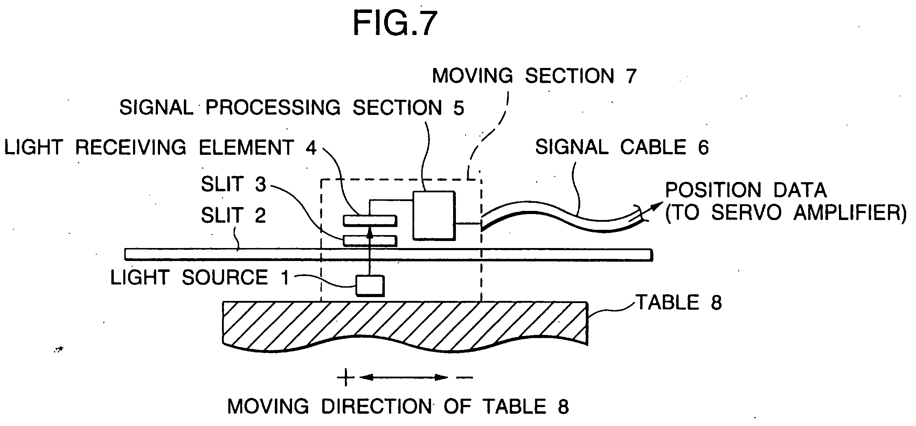

Fig. 7 is an arrangement view of a conventional position detector for detecting a position of an object by utilizing Moire stripes, for example, a linear encoder. In the view, reference numeral 1 is a light source, reference numeral 2 is a slit attached and fixed to a machine tool not shown, reference numeral 3 is a slit arranged being opposed to the light source 1 in such a manner that the slit 2 is interposed between the light source 1 and the slit 3, reference numeral 4 is a light receiving element for receiving light and converting it into an electric current signal, reference numeral 5 is a signal processing section, and reference numeral 6 is a signal cable. Reference numeral 8 is a table which is an object, the position of which is detected. Reference numeral 7 is a moving section attached to the table 8. The light source 1, slit 3, light receiving element 4 and signal processing section 5 are attached to this moving section 7.

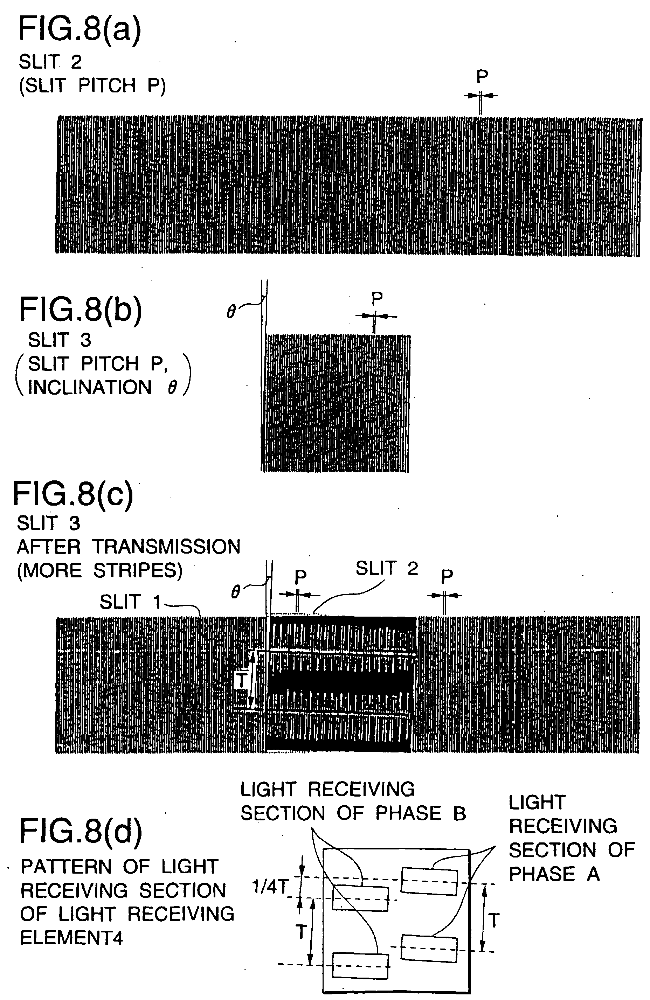

Next, operation of this conventional linear encoder will be explained below. Light emitted from the light source 1 is transmitted through the slits 2 and 3 and received by the light receiving element 4. As shown in Figs. 8(a) and 8(b), a portion through which light is transmitted and a portion by which light is shaded are alternately arranged by pitch P in the slits 2 and 3. These slits 2 and 3 are formed as follows. After chromium has been vacuum-deposited on a transparent plate such as a plate of glass, it is subjected to etching, so that these slits can be formed.

Since the slit 3 is inclined with respect to the slit 2 by a minute angle $\theta$, Moire stripes, the period of which is $T (=P/\theta)$, are generated as shown in Fig. 8(c) after light has been transmitted through the slit 3.

In Fig. 7, when the table 8 is moved by distance L in the direction of mark + or mark -, the slit 3 is relatively moved with respect to the slit 2 by distance L. Therefore, Moire stripes are moved upward or downward by distance $L/\theta (= L/P \times T)$.

As shown in Fig. 8(d), the light receiving element 4 has a light receiving section of phase A and a light receiving section of phase B which are shifted from each other by $(1/4)T$ in the advancing direction of Moire strips. In the respective light receiving sections, there are provided light receiving windows in the advancing direction of Moire stripes at the intervals of period $T (= P/\theta)$. Therefore, according to the movement of the table 8, the respective light receiving elements 4 output electric signals of phases A and B, which are shifted from each other by 90°, the waveforms of which are substantially rectangular.

These electric current signals are outputted to the signal processing section 5. The signal processing section 5 converts these electric current signals into voltage signals. By the phases of the two voltage signals of phases A and B, the signal processing section 5 discriminates a moving direction of the table 8 and makes differential pulses of the rising and falling of the signals of phases A and B, and a quantity of division is increased by four times and the position data is made.

Further, the signal processing section 5 outputs the position data to a servo amplifier (not shown) via the signal cable 6. The servo amplifier recognizes a position of the table 8 by the position data.

The following problems may be encountered in the above conventional linear encoder in which Moire stripes are utilized. In the above conventional linear encoder, it is necessary to provide the slit 2, the length of which is substantially equal to the moving distance of the table 8. Accordingly, the cost of the device is increased. When the moving distance of the table 8 is relatively long, the length of the slit 2 is also extended. As a result, the cost of the device is remarkably increased.

In the case of a machine tool, the table 8 of which is moved at high speed, breaking of wire tends to occur in the signal cable 6, and the sheath of the signal cable 6 tends to be damaged. Therefore, in order to enhance the reliability, it is necessary to use a signal cable 6 in which breaking of wire seldom occurs and the sheath of which is seldom damaged. Therefore, the manufacturing cost of the device is raised.

Since a waveform of the electric Current signal received by the signal processing section 5 is rectangular, it is impossible to divide the electric current signal by four times or more, that is, it is impossible to provide a high resolution.

Position data received by the signal processing section 5 is data of an incremental type in which one pulse is generated each time the table 8 is moved by predetermined distance P. Therefore, in order to detect an absolute position, it is necessary to previously conduct an origin returning motion when the electric power source is turned on.

It is an object of the present invention to provide a position, detector characterized in that: the cost of the device is not remarkably increased even if the table 8 travels by a long distance; and it is possible to use a signal cable 6, the cost of which is not high.

It is another object of the present invention to provide a position detector of high resolution.

It is still another object of the present invention to provide a position detector by which position data of an absolute value can be outputted and it is unnecessary to conduct an origin returning motion even when the electric power source is turned on.

DISCLOSURE OF THE INVENTION

The present invention provides a position detector comprising: a moving section having a first light transmitting and shading means in which a light transmitting section and a light shading section are alternately arranged, and also having a reflecting means; a fixed section having a second light transmitting and shading means in which a light transmitting section and a light shading section are alternately arranged, also having a light receiving means for converting received light into an electric signal, and also having a light emitting means; and a signal processing means, wherein light emitted from the light emitting means is reflected by the reflecting means, the thus reflected light is transmitted through the first light transmitting and shading means, the thus transmitted light is transmitted through the second light transmitting and shading means, Moire stripes generated by the first and the second light transmitting and shading means are received by the light receiving means, and the signal processing means detects a position of the moving section according to a conversion output of the light receiving means. Therefore, it is unnecessary to provide a light transmitting and shading means, the length of which is larger than this moving distance. As a result, the cost of the device can be reduced.

The light receiving means includes a plurality of light receiving windows arranged at the pitches, of Moire stripes generated by the first and the second light transmitting and the shading-means, and light received by the plurality of light receiving windows is converted into electric signals. Therefore, Moire stripes can be more stably detected and it is possible to enhance the accuracy of detecting a position.

A position detector further comprises a third light transmitting and shading means for restricting a quantity of transmitted light so that the quantity of transmitted light can be changed like a sine wave in the period of Moire stripes in the moving direction of Moire stripes generated by the first and the second light transmitting and shading means, wherein the light receiving means receives light transmitted through the third light transmitting and shading means. Accordingly, it is possible to obtain a signal, the waveform of which changes like a sine wave, for the movement of the moving section, and resolution of detecting a position can be enhanced by this signal, the waveform of which changes like a sine wave.

The present invention provides a position detector comprising: a moving section having a light transmitting and reflecting means for dividing incident light into transmitted light and reflected light, also having a reflecting means, and also having a first and a fourth light transmitting and shading means in which the respective light transmitting section and the respective light shading section are alternately arranged; a fixed section having a second and a fifth light transmitting and shading means in which the respective light transmitting section and the respective light shading section are alternately arranged, also having a third light transmitting and shading means for restricting a quantity of transmitted light so that the quantity of transmitted light can be changed like a sine wave in the period of Moire stripes in the moving direction of Moire stripes generated by the first and the second light transmitting and shading means, also having a sixth light transmitting and shading means for restricting a quantity of transmitted light so that the quantity of transmitted light can be changed like a sine wave in the period of Moire stripes in the moving direction of Moire stripes generated by the fourth and the fifth light transmitting and shading means, also having a first and a second light receiving means for converting received light into an electric signal, and also having a light emitting means; and a signal processing means, wherein light emitted from the light emitting means and reflected by the light transmitting and reflecting means is transmitted through the first and second light transmitting and shading means and formed into Moire stripes by the first and the second light transmitting and shading means and transmitted through the third light transmitting and shading means and received by the first light receiving means, light transmitted through the light transmitting and reflecting means is reflected by the reflecting means and transmitted through the fourth and the fifth light transmitting and shading means and formed into Moire stripes by the fourth and the fifth transmitting and shading means and transmitted through the sixth light transmitting and shading means and received by the second light receiving means, and the signal processing means detects a position of the moving section according to conversion outputs of the first and second light receiving means. Therefore, when the electric power source is turned on, it is unnecessary to conduct a work of returning to the origin. Accordingly, the working efficiency can be enhanced.

BRIEF DESCRIPTION OF THE DRAWINGS

Fig. 1 is an arrangement view showing a position detector of Embodiment 1 of the present invention.
Fig. 2 is a schematic illustration showing the position detector illustrated in Fig. 1.
Fig. 3 is an arrangement view showing a position detector of Embodiment 2 of the present invention.
Fig. 4 is a schematic illustration showing the position detector illustrated in Fig. 3.
Fig. 5 is an arrangement view showing a position detector of Embodiment 3 of the present invention.
Fig. 6 is a schematic illustration showing the position detector illustrated in Fig. 5.
Fig. 7 is an arrangement View showing a conventional position detector.

Fig. 8 is a schematic illustration of the positional detector illustrated in Fig. 7.

THE MOST PREFERRED EMBODIMENT

Embodiment 1

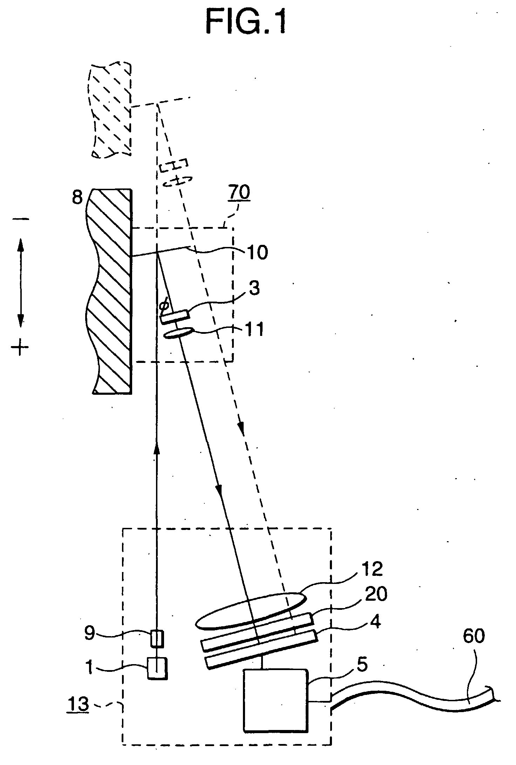

Referring to Fig. 1, Embodiment 1 of the position detector of the present invention will be explained as follows. In the drawing, reference numeral 1 is a light emitting means, for example, a light source. Reference numeral 3 is a first light transmitting and shading means, for example, a slit. Reference numeral 20 is a second light transmitting and shading means, for example, a slit. Reference numeral 4 is a light receiving means, for example, a light receiving element. Reference numeral 5 is a signal processing means, for example, a signal processing section. Reference numeral 60 is a signal cable. Reference numeral 9 is a lens for making a beam of light emergent from the light source 1 to be a parallel beam of light. Reference numeral 10 is a reflecting means, for example, a mirror. Reference numerals 11 and 12 are projection lenses, the magnifications of which are the same. As described on page 158 of the document "Base of Applied Optical Measurement" edited by Optical Industrial Measurement Research Committee and published by Measurement Automatic Control Society in 1983, these projection lenses are provided for forming an image of the slit 3 in the front of the slit 20 in a condition of excellent contrast. In this connection, the light source 1 may be a white lamp. However, in order to reduce a size of the light source and a diameter of the beam spot and increase an optical output, a semiconductor laser is used for the light source 1. Reference numeral 70 is a moving section. This moving section 70 is attached to a table 8 which is an object to be detected. The moving section 70 includes a mirror 10, slit 3 and projection lens 11. Reference numeral 13 is a fixed section attached to a machine tool not shown in the drawing. This fixed section 13 includes: a light source 1, lens 9, projection lens 12, slit 20, light receiving element 4, and signal processing section 5.

Next, operation of the position detector shown in Fig. 1 will be explained below. Light emitted from the light source 1 is made to be parallel by the lens 9 and proceeds to the moving section 70. This parallel light is reflected by the mirror 10, which is arranged in the moving section 70, in a direction which forms angle φ with respect to the incident direction of light. This reflected light is received by the light receiving element 4 via the slit 3, projection lens 11, projection lens 12 and slit 20.

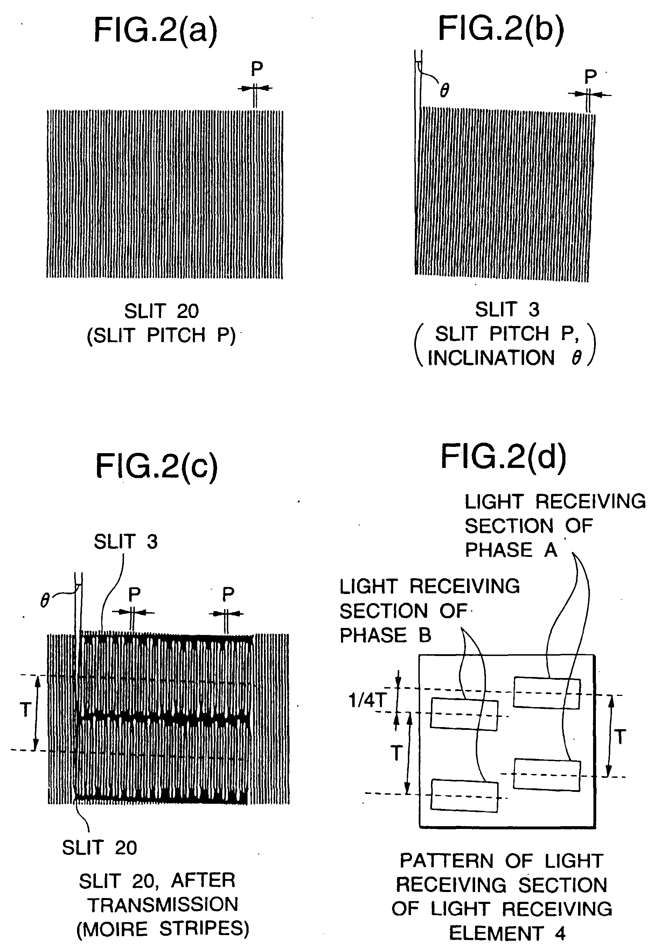

As shown in Figs. 2(a) and 2(b), in the slits 20 and 3, a light transmitting portion and a light shading portion are alternately provided by pitch P. These slits 20 and 3 are formed as follows. After chromium has been vacuum-deposited on a transparent plate such as a plate of glass, it is subjected to etching, so that these slits can be formed.

Since the slit 3 is tilted with respect to the slit 20 by minute angle θ, Moire stripes, the period of which is T (= P/θ) , are generated as shown in Fig. 2(c).

When the table 8 is moved in the direction of mark + or mark - by distance L in Fig. 1, the slit 3 is relatively moved to the right or left with respect to the slit 20 by distance Lsin φ. Accordingly, Moire stripes are moved upward or downward by distance Lsin φ/θ (= Lsin φ/P × T).

As shown in Fig. 1(d), the light receiving section of phase A and that of phase B of the light receiving element 4 are shifted by (1/4)T from each other in the direction in which Moire stripes proceed. Since the light receiving windows of the light receiving sections of phases A and B are arranged at the same period of T (= P/θ) as that of Moire stripes, when the table 8 is moved, the light receiving element 4 outputs electric current signals of phases A and B, the waveforms of which are similar to rectangular waves; and the phases of which are shifted from each other by 90°.

These electric current signals are outputted to the signal processing section 5. The signal processing section 5 converts these electric current signals into voltage signals and discriminates a moving direction of the table 8 by the phases of the two voltage signals of phases A and B. At the same time, the signal processing section 5 makes differential pulses of the rising and falling of the signals of phases A and B and increases a quantity of division by four times and makes position data showing a moving distance of the moving section 70 with respect to the fixed section 13. In this connection, in order to detect an absolute position of the moving section 70, it is necessary to previously conduct a work of returning to the origin when the electric power source is turned on.

Further, the signal processing section 5 outputs the position data to a servo amplifier (not shown) via the signal cable 60. The servo amplifier recognizes a position of the table 8 by the position data.

According to this Embodiment 1, even if a moving distance of the table 8 is long, the cost of the device is not raised. Further, an inexpensive cable can be used as the signal cable 60. Therefore, it is possible to prevent the cost of the device from increasing.

Embodiment 2

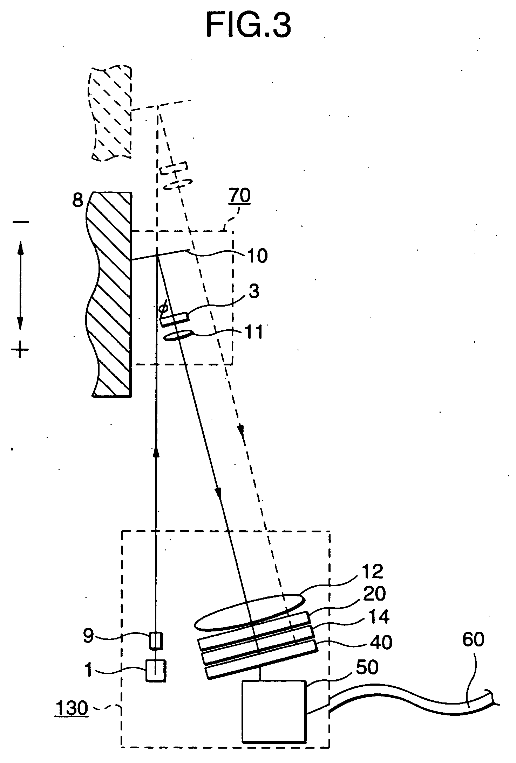

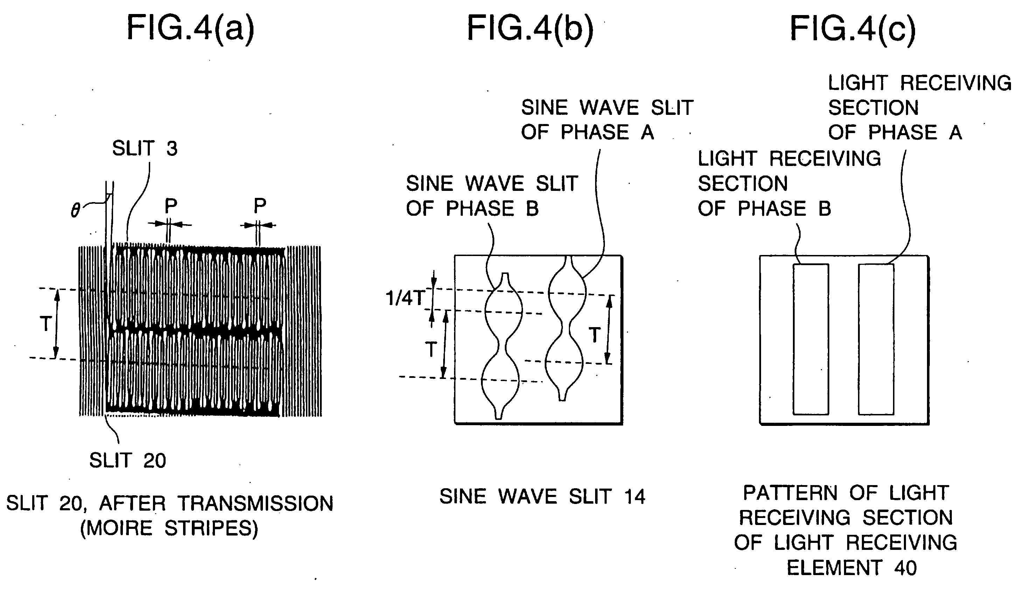

Referring to Figs. 3 and 4, Embodiment 2 of the present invention will be explained below. In the position detector shown in Fig. 3, there is provided a sine wave slit 14, which is a third light transmitting and shading means, between the slit 20 and the light receiving element, and there is used a light receiving element 40, the profile of the light receiving section of which is different. Other points are the same as those of the device shown in Fig. 1.

As shown in Fig. 4(b), there are provided two

slits in period $T (= P/\theta)$ of Moire stripes in the direction in which Moire stripes proceed, wherein a quantity of transmitted light is changed like a sine wave. These two slits are arranged in such a manner that they are shifted by $(1/4)T$ from each other in moving direction of Moire stripes so that the quantities of transmitted light can be changed while the phases are shifted by $(1/4)T$ from each other.

This sine wave slit 14 is formed as follows. After chromium has been vacuum-deposited on a transparent plate such as a plate of glass, it is subjected to etching, so that the slit can be formed. As shown in Fig. 4(c), the light receiving element 40 has two light receiving sections of phases A and B respectively corresponding to the two slits of the sine wave slit 14, and sizes of the respective light receiving sections are so large that they can include the corresponding slits.

Next, operation of the position detector will be explained as follows.

Light emitted from the light source 1 is made to be parallel by the lens 9 and proceeds to the moving section 70. This parallel light is reflected by the mirror 10 in a direction which forms angle $\phi$ with respect to the incident direction of light. This reflected light is received by the light receiving element 40 via the slit 3, projection lens 11, projection lens 12, slit 20 and sine wave slit 14.

In the slits 20 and 3, a light transmitting portion and a light shading portion are alternately provided by pitch P.

Since the slit 3 is tilted with respect to the slit 20 by minute angle $\theta$, Moire stripes, the period of which is $T (= P/\theta)$, are generated as shown in Fig. 4(a).

When the table 8 is moved in the direction of mark + or mark - by distance L in Fig. 3, the slit 3 is relatively moved to the right or left with respect to the slit 20 by distance $L\sin\phi$. Accordingly, Moire stripes are moved upward or downward by distance $L\sin\phi/\theta$ $(= L\sin\phi/P \times T)$ in Fig. 4(a). The thus moved Moire stripes are transmitted through the sine wave slit 14, and then they are received by the light receiving element 40. Profiles of the sine wave slits of phases A and B are changed like a sine wave in the proceeding direction of Moire stripes, the period of which is $T (= P/\theta)$, and the sine wave slits are arranged being shifted by $(1/4)T$ from each other in the proceeding direction of Moire stripes. Therefore, when the table 8 is moved, the light receiving element 40 outputs electric current signals of phases A and B, the waveforms of which are a sine and a cosine waveform.

The signal processing section 50, which is a signal processing means, converts these electric current signals into voltage signals and discriminates a moving direction of the table 8 by the phases of the voltage signals of the sine and the cosine waveform. Then, the voltage signals of the sine and the cosine waveform are divided by A/D converter not shown, so that the voltage signals can be converted into position data.

When A/D converter of n bits is used, a quantity of division is increased by $2n \times 2$ times. Therefore, it becomes possible to obtain position data of high resolution. In this connection, in the same manner as that of Embodiment 1, in order to detect an absolute position of the moving section 70, it is necessary to previously conduct a work of returning to the origin when the electric power source is turned on.

The signal processing section 50 outputs the thus made position data of high resolution to a servo amplifier not shown via the signal cable 60. The servo amplifier recognizes a position of the table 8 by the position data.

Embodiment 3

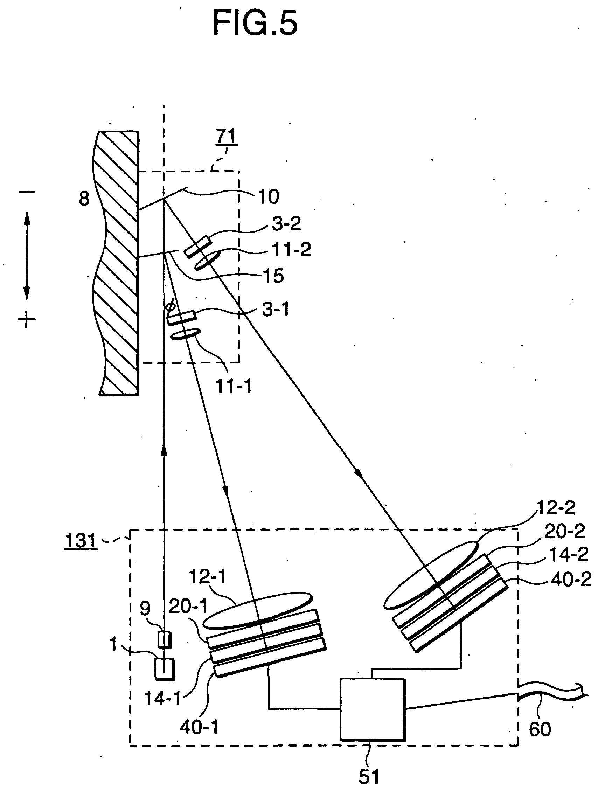

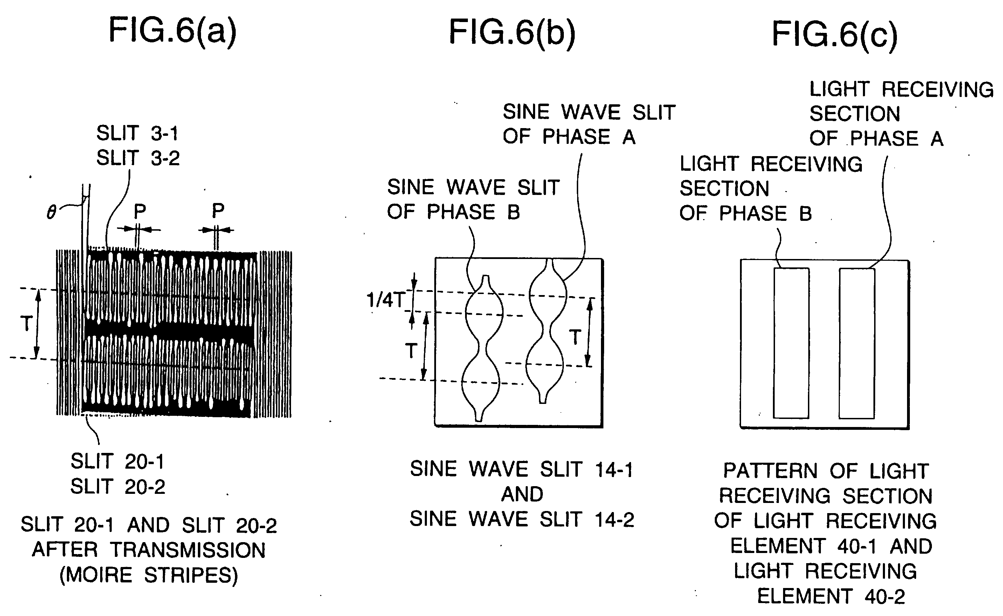

Referring to Figs. 5 and 6, Embodiment 3 of the present invention will be explained as follows. The structure of the device shown in Fig. 5 is the same as that of the device shown in Fig. 3 except for the following items (1) to (3).

(1) The moving section 71 includes a half mirror 15 which is a light transmitting and reflecting means for branching light, which is emitted from the light source 1, into transmitted light and reflected light.
(2) Due to the foregoing, two beams of light, the emergent angles of which are $\phi 1$ and $\phi 2$, are emitted from the moving section 71.
(3) Consequently, this embodiment is provided with two sets of slits 3, projection lenses 11, projection lenses 12, slits 20, sine wave slits 14 and light receiving element 40, wherein one set of them are illustrated in Fig. 2.

Next, operation of the position detector shown in Fig. 5 will be explained below.

Light emitted from the light source 1 is made parallel by the lens 9 and directed to the moving section 71. This parallel light is divided into transmitted light and reflected light by the half mirror 15.

Reflected light is further reflected by the half mirror 15 in a direction which forms angle $\phi 1$ with respect to the incident direction. Then, the reflected light is transmitted through the slit 3-1 which is a first light transmitting and shading means, projection lens 11-1, projection lens 12-1, slit 20-1 which is a second light transmitting and shading means, and sine wave slit 14-1 which is a third light transmitting and shading means. After that, the reflected light is received by the light receiving element 40-1 which is a first light receiving element.

The slits 20-1 and 3-1 are composed in such a manner that a light transmitting portion and a light shading portion are alternately arranged by pitch P.

Since the slit 3-1 is arranged being tilted by minute angle $\theta$ with respect to the slit 20-1, Moire stripes of period $T (= P/\theta)$ are generated as shown in Fig. 6(a).

On the other hand, light which has been transmitted through the half mirror 15 is reflected by the reflecting mirror 10, which is a reflecting means, in a direction forming angle $\phi 2$ with respect to the incident direction of light. The thus reflected light is transmitted through the slit 3-2 which is a fourth light transmitting and shading means, projection lens 11-2, projection lens 12-2, slit 20-2 which is a fifth light transmitting and shading means, and sine wave slit 14-2 which is a sixth light transmitting and shading means. After that, the light is received by the light receiving element 40-2 which is a second light receiving means.

In the slits 3-2 and 20-2, a light transmitting portion and a light shading portion are alternately provided by pitch P. Since the slit 3-2 is tilted with respect to the slit 20-2 by minute angle $\theta$, Moire stripes, the period of which is $T \ (= P/\theta)$, are generated as shown in Fig. 6(a).

When the table 8 is moved in the direction of mark + or mark - by distance L in Fig. 5, Moire stripes generated right after the slit 20-1 are moved upward or downward by $L \sin \phi 1/\theta \ (= L \sin \phi 1/P \times T)$. In the same manner, Moire stripes generated right after the slit 20-2 are moved upward or downward by $L \sin \phi 2/\theta \ (= L \sin \phi 2/P \times T)$. When reflecting angle $\phi$ of the reflected light sent from the moving section 71 is different as described above, a moving distance of Moire stripes according to the movement of the table 8 is also different.

In this Embodiment 3, angle $\phi 1$ is set so that Moire stripes can be moved by a distance corresponding to one period when the table 8 is moved by a full stroke, which are defined as Moire stripes of rough detection, and angle $\phi 2$ is set so that Moire stripes can be moved by a distance corresponding to N periods (N > 1) when the table 8 is moved by a full stroke, which are defined as Moire stripes of accurate detection.

Moire stripes of rough detection are transmitted through the sine wave slit 14-1 and then received by the light receiving element 40-1, and Moire stripes of accurate detection are transmitted through the sine wave slit 14-2 and then received by the light receiving element 40-2.

As shown in Fig. 6(b), the sine wave slits 14-1 and 14-2 are composed in the same manner as that of the sine wave slit 14 shown in Fig. 4(b). As shown in Fig. 6(c), the light receiving elements 40-1 and 40-2 are composed in the same manner as that of the light receiving element 40 shown in Fig. 4(c). The light receiving elements 40-1 and 40-2 respectively form right receiving sections of phases A and B.

Accordingly, when the table 8 is moved by a full stroke, the light receiving element 40-1 outputs electric current signals of the sine and the cosine wave corresponding to one period, and the light receiving element 40-2 outputs electric current signals of the sine and the cosine wave corresponding to N periods.

The signal processing section 51, which is a signal processing means, converts these electric current signals into voltage signals and discriminates a moving direction of the table 8 by the phases of the voltage signals of the sine and the cosine waveform. Then, on the light receiving element 40-1 side and the light receiving element 40-2 side, the voltage signals of the sine and the cosine waveform are divided by A/D converter, so that the voltage signals can be converted into position data. At this time, when A/D converter of n bits is used, a quantity of division is increased by $2n \times 2$ times. Therefore, it becomes possible to obtain position data of high resolution with respect to the light receiving element 40-1 side and the light receiving element 40-2 side.

When the number of division $(2n \times 2)$ on the light receiving element 40-1 side (on the side for detecting Moire stripes of rough detection) is larger than the number N of periods on the light receiving element 40-2 side (on the side for detecting Moire stripes of accurate detection), that is, when $2n \times 2 > N$, it is possible to detect an absolute position highly accurately, at which the full stroke is divided into $N \times (2n \times 2)$, by putting position data on the light receiving element 40-1 side and position data on the light receiving element 40-2 side on each other.

The signal processing section 51 outputs the position data showing the absolute position to a servo amplifier not shown via the signal cable 60. The servo amplifier can recognize an absolute position of the table 8 by the position data.

Therefore, according to Embodiment 3 of the present invention, it is unnecessary to conduct a work of returning to the origin when the electric power source is turned on. Therefore, it is possible to provide a handy position detector.

In this connection, in Embodiment 2 or 3, when the moving section 70, 71 is moved, an absolute value of a quantity of received light, which is received by the light receiving element 40, 40-1, 40-2, is changed. Therefore, when a state of this change is previously stored in a memory, a result of detection may be corrected according to the content of the memory. Alternatively, other light receiving elements may be arranged at two positions close to the right and the left ends of the slits 20, 20-1, 20-2, and mechanisms for moving the sine wave slits 14, 14-1, 14-2 and the light receiving elements 40, 40-1, 40-2 are provided so that the light receiving outputs of the two light receiving elements can be the same, and the center of reflected light may be made to agree with the centers of the light receiving elements 40, 40-1, 40-2.

In this connection, in Embodiments 1 to 3, the fixed section 13, 130, 131 is hot moved, and the moving section 70, 71 is moved. On the contrary, the fixed section 13, 130, 131 may be moved, and the moving section 70, 71 may not be moved. However, in this contrary case, it is necessary to use a signal cable 60 in which the breaking of wire seldom occurs and the sheath is seldom damaged.

INDUSTRIAL POSSIBILITY

As described above, the position detector of the present invention can be applied to various devices, for example, a semiconductor manufacturing device, in which it is necessary to detect a position of the moving section. Especially when it is required to reduce the cost of the position detector, the present invention is preferably used.

**Claims**

1. A position detector comprising: a moving section having a first light transmitting and shading means in which a light transmitting section and a light shading section are alternately arranged, and also having a reflecting means; a fixed section having a second light transmitting and shading means in which a light transmitting section and a light shading section are alternately arranged, also having a light receiving means for converting received light into an electric signal, and also having a light emitting means; and a signal processing means, wherein light emitted from the light emitting means is reflected by the reflecting means, the thus reflected light is transmitted through the first light transmitting and shading means, the thus transmitted light is transmitted through the second light transmitting and shading means, Moire stripes generated by the first and the second light transmitting and shading means are received by the light receiving means, and the signal processing means detects a position of the moving section according to a conversion output of the light receiving means.

2. A position detector according to claim 1, wherein the light receiving means includes a plurality of light receiving windows arranged at the pitches of Moire stripes generated by the first and the second light transmitting and the shading means, and light received by the plurality of light receiving windows is converted into electric signals.

3. A position detector according to claim 1, further comprising a third light transmitting and shading means for restricting a quantity of transmitted light so that the quantity of transmitted light can be changed like a sine wave in the period of Moire stripes in the moving direction of Moire stripes generated by the first and the second light transmitting and shading means, wherein the light receiving means receives light transmitted through the third light transmitting and shading means.

4. A position detector comprising:

a moving section having a light transmitting and reflecting means for dividing incident light into transmitting light and reflected light, also having a reflecting means, and also having a first and a fourth light transmitting and shading means in which the respective light transmitting section and the respective light shading section are alternately arranged;

a fixed section having a second and a fifth light transmitting and shading means in which the respective light transmitting section and the respective light shading section are alternately arranged, also having a third light transmitting and shading means for restricting a quantity of transmitted light so that the quantity of transmitted light can be changed like a sine wave in the period of Moire stripes in the moving direction of Moire stripes generated by the first and the second light transmitting and shading means, also having a sixth light transmitting and shading means for restricting a quantity of transmitted light so that the quantity of transmitted light can be changed like a sine wave in the period of Moire stripes in the moving direction of Moire stripes generated by the fourth and the fifth light transmitting and shading means, also having a first and a second light receiving means for converting received light into an electric signal, and also having a light emitting means; and

a signal processing means, wherein light emitted from the light emitting means and reflected by the light transmitting and reflecting means is transmitted through the first and second light transmitting and shading means and formed into Moire stripes by the first and the second light transmitting and shading means and transmitted through the third light transmitting and shading means and received by the first light receiving means, light transmitted through the light transmitting and reflecting means is reflected by the reflecting means and transmitted through the fourth and the fifth light transmitting and shading means and formed into Moire stripes by the fourth and the fifth transmitting and shading means and transmitted through the sixth light transmitting and shading means and received by the second light receiving means, and the signal processing means detects a position of the moving section according to conversion outputs of the first and second light receiving means.

# FIG.1

# FIG.2(a)

SLIT 20
(SLIT PITCH P)

# FIG.2(b)

SLIT 3
$\left(\begin{array}{l} \text{SLIT PITCH P,} \\ \text{INCLINATION } \theta \end{array}\right)$

# FIG.2(c)

SLIT 20, AFTER
TRANSMISSION
(MOIRE STRIPES)

# FIG.2(d)

PATTERN OF LIGHT
RECEIVING SECTION
OF LIGHT RECEIVING
ELEMENT 4

# FIG.3

## FIG.4(a)

SLIT 3

$\theta$

P  P

T

SLIT 20

SLIT 20, AFTER TRANSMISSION
(MOIRE STRIPES)

## FIG.4(b)

SINE WAVE SLIT
OF PHASE A

SINE WAVE SLIT
OF PHASE B

1/4T

T   T

SINE WAVE SLIT 14

## FIG.4(c)

LIGHT RECEIVING
SECTION
OF PHASE A

LIGHT RECEIVING
SECTION
OF PHASE B

PATTERN OF LIGHT
RECEIVING SECTION
OF LIGHT RECEIVING
ELEMENT 40

EP 0 990 870 A1

FIG.5

FIG.6(c)

LIGHT RECEIVING SECTION OF PHASE A

LIGHT RECEIVING SECTION OF PHASE B

PATTERN OF LIGHT RECEIVING SECTION OF LIGHT RECEIVING ELEMENT 40-1 AND LIGHT RECEIVING ELEMENT 40-2

FIG.6(b)

SINE WAVE SLIT OF PHASE A

SINE WAVE SLIT OF PHASE B

T

1/4T

T

SINE WAVE SLIT 14-1 AND SINE WAVE SLIT 14-2

FIG.6(a)

SLIT 3-1
SLIT 3-2

P

P

θ

T

SLIT 20-1
SLIT 20-2

SLIT 20-1 AND SLIT 20-2 AFTER TRANSMISSION (MOIRE STRIPES)

13

# FIG.7

MOVING SECTION 7

SIGNAL PROCESSING SECTION 5

LIGHT RECEIVING ELEMENT 4

SIGNAL CABLE 6

SLIT 3

SLIT 2

POSITION DATA
(TO SERVO AMPLIFIER)

LIGHT SOURCE 1

TABLE 8

MOVING DIRECTION OF TABLE 8

EP 0 990 870 A1

# FIG.8(a)
SLIT 2
(SLIT PITCH P)

P

# FIG.8(b)
SLIT 3
$\begin{pmatrix} \text{SLIT PITCH P,} \\ \text{INCLINATION } \theta \end{pmatrix}$

θ   P

# FIG.8(c)
SLIT 3
AFTER TRANSMISSION
(MORE STRIPES)

SLIT 1    θ   P   SLIT 2   P

T

# FIG.8(d)
PATTERN OF LIGHT
RECEIVING SECTION
OF LIGHT RECEIVING
ELEMENT4

LIGHT RECEIVING
SECTION OF PHASE B

LIGHT
RECEIVING
SECTION OF
PHASE A

1/4T   T   T

# INTERNATIONAL SEARCH REPORT

International application No.

PCT/JP98/01756

A. CLASSIFICATION OF SUBJECT MATTER
    Int.Cl$^6$ G01B11/00, G01D5/36

According to International Patent Classification (IPC) or to both national classification and IPC

B. FIELDS SEARCHED

Minimum documentation searched (classification system followed by classification symbols)
    Int.Cl$^6$ G01B11/00-11/30, G01D5/26-5/38

Documentation searched other than minimum documentation to the extent that such documents are included in the fields searched
    Jitsuyo Shinan Koho        1926-1996    Toroku Jitsuyo Shinan Koho    1994-1998
    Kokai Jitsuyo Shinan Koho   1971-1998    Jitsuyo Shinan Toroku Koho    1996-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 9-196706, A (Mitsutoyo Corp.), July 31, 1997 (31. 07. 97), Full text ; all drawings (Family: none) | 1-4 |
| A | JP, 8-304117, A (Futaba Corp.), November 22, 1996 (22. 11. 96), Full text ; all drawings (Family: none) | 1-4 |
| A | JP, 7-286861, A (Baumeru Electric AG.), October 31, 1995 (31. 10. 95), Fig. 3 & CH, 00562/94-0 | 3 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| July 9, 1998 (09. 07. 98) | July 21, 1998 (21. 07. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)